Europäisches Patentamt

(19) European Patent Office

Office européen des brevets

(11) Veröffentlichungsnummer: **0 017 175**

A1

(12) EUROPÄISCHE PATENTANMELDUNG

(21) Anmeldenummer: 80101639.5

(22) Anmeldetag: 27.03.80

(51) Int. Cl.³: **G 11 B 5/012**
G 11 B 5/02, G 11 B 5/09
G 11 B 5/47, G 11 B 5/58

(30) Priorität: 30.03.79 DE 2912708

(43) Veröffentlichungstag der Anmeldung:
15.10.80 Patentblatt 80/21

(84) Benannte Vertragsstaaten:
AT BE CH DE FR GB IT LU NL SE

(71) Anmelder: BASF Aktiengesellschaft
Carl-Bosch-Strasse 38
D-6700 Ludwigshafen(DE)

(72) Erfinder: Felleisen, Peter
Sedanstrasse 21
D-6840 Lampertheim(DE)

(72) Erfinder: Grosshans, Peter
Rietburgstrasse 11
D-6740 Landau(DE)

(72) Erfinder: Mayer, Dieter, Dr.
Berner Weg 28
D-6700 Ludwigshafen(DE)

(54) Datenspeichersystem und Magnetscheiben dafür.

(57) Datenspeichersystem mit rotierenden Magnetscheiben (b) mit konzentrischen Magnetspuren auf den Aufzeichnungsflächen und jeder Aufzeichnungsfläche zugeordneten Magnetköpfen, (10, 11) die auf die Magnetspuren positionierbar sind, und einen Servomagnetkopf (14) der einer Magnetspur mit Servoinformationen zugeordnet ist, wobei jeder Aufzeichnungsfläche der Magnetscheibe zwei Magnetköpfe (10, 11) mit unterschiedlicher Spaltlänge zugeordnet sind, wodurch zwei Zonen unterschiedlicher Magnetspurbreite schreib- und lesbar sind, und in der Innenzone (I) die breiteren und in der Außenzone (II) die schmaleren Magnetspuren geschrieben und gelesen werden und der Servomagnetkopf (14) eine Spaltlänge aufweist, die dem der Außenzone (II) zugeordneten Magnetkopf (ii) entspricht.

FIG.1

BASF Aktiengesellschaft                    O.Z. 0050/033769

Datenspeichersystem und Magnetscheiben dafür

Die Erfindung betrifft ein Datenspeichersystem mit rotierenden Magnetscheiben mit konzentrischen Magnetspuren auf den Aufzeichnungsflächen und mehreren, jeder Aufzeichnungsfläche zugeordneten Magnetköpfen, die auf die Magnetspuren positionierbar sind und mit mindestens einem Servomagnetkopf, der mindestens einer Magnetspur mit Servoinformationen zugeordnet ist, und wobei innere und äußere Magnetspuren mit Dateninformationen mittels derselben Frequenzen beschrieben werden, sowie die Magnetscheiben dafür.

Magnetscheiben im Sinne der vorliegenden Erfindung sind alle starren und flexiblen durch Relativdrehung betreibbare Magnetaufzeichnungsträger.

Bei der Datenaufzeichnung spielen bei vorgegebenem üblichem Schreiben mit 2- oder 3-Frequenzverfahren - FM - oder MFM- -Verfahren folgende Größen eine Rolle:
die "Auflösung": Pegelverhältnis der Signale mit der höchsten und niedrigsten Frequenz einer Magnetspur, sie charakterisiert das Frequenzverhalten der Magnetschicht;
die "Aufzeichnungsdichte": die Anzahl der in einer Magnetspur pro Längeneinheit zu schreibenden Magnetflußwechsel (fci) oder Informationseinheiten (bpi);
die "Flächenspeicherdichte": die Dichte der Informationen pro Flächeneinheit (bpiz);
das "Signal/Rausch-Verhältnis" (S/R-Verhältnis) des Lesesignals: Verhältnis des Nutzsignals zum Störsignal.

In üblichen Anlagen der Datenaufzeichnung wird ein fester Takt benutzt, der bei kreisscheibenförmigen Magnetaufzeichnungsträgern von der äußersten zur innersten Magnetspur einen immer kleiner werdenden Flußwechselabstand der Datensignale bewirkt.
Spr/BL

Die Aufzeichnungs- oder Informationsdichte ist somit durch das Aufzeichnungsverhalten der Magnetschicht der innersten Magnetspur begrenzt, je größer die Auflösung der Magnetspur ist, um so dichter können die Flußwechsel bzw. die Datensignale aufgezeichnet werden, ohne daß durch Phasenverschiebungen Fehler beim Lesen der aufgezeichneten Daten entstehen.

Die Rauschstörungen setzen sich aus dem Gleichfeld-Rauschen der Magnetscheibe und dem Elektronik-Rauschen der Schreib/Lese-Elektronik zusammen. Da infolge des Takts auf der Innenspur der Flußwechselabstand am kleinsten ist, ist auch der Lesepegel am kleinsten, so daß das Signal/Rausch-Verhältnis hier am schlechtesten bezogen auf die gesamten Spurenzahl ist.

Bei üblicherweise gleicher Spurbreite wäre es zur Erhöhung der Informationsdichte möglich, von der Innenspur zur Außenspur wachsende Aufzeichnungsdichten zu verwenden, bei üblicher konstanter Rotationsgeschwindigkeit der Magnetscheibe änderte sich jedoch dadurch zwangsläufig die Datenübertragungsrate, was ein aufwendiges und kostenungünstiges Zwischenspeichern der Datensignale erfordern würde.

Mit der DE-OS 17 74 486 ist es für einen Magnetplattenspeicher bekannt, in zwei Zonen der Magnetplatte die Datensignale mit zwei verschiedenen Frequenzen aufzuzeichnen, wobei die Frequenz der inneren Zone durch die maximale Aufzeichnungsdichte auf der innersten Spur und die Frequenz der äußeren Zone die maximale Aufzeichnungsdichte auf der innersten Spur der äußeren Zone bestimmt sind.

Eine solche Maßnahme setzt die Möglichkeit der freien Frequenzwahl voraus und hat ihre Grenze durch das sehr unter- schiedliche Frequenzverhalten der Magnetschicht bei hohen und tiefen Frequenzen.

Es ist Aufgabe der vorliegenden Erfindung, die Flächenspeicherdichte bei bekannten Datenspeichersystemen mit Magnetscheiben zu erhöhen ohne genormte Aufzeichnungscodes oder Datenübertragungsnormen zu verändern.

Die Aufgabe wird mit einem Datenspeichersystem mit rotierenden Magnetscheiben mit konzentrischen Magnetspuren auf den Aufzeichungsflächen und jeder Aufzeichnungsfläche zugeordneten mehreren Magnetköpfen, die auf die Magnetspuren positionierbar sind, und mit mindestens einem Servomagnetkopf, der mindestens einer Magnetspur mit Servoinformationen zugeordnet ist, und wobei innere und äußere Magnetspuren mit Dateninformationen mittels derselben Frequenzen beschrieben werden, dadurch gelöst, daß jeder Aufzeichnungsfläche der Magnetscheiben mindestens zwei Magnetköpfe mit unterschiedlicher Spaltlänge zugeordnet sind, wodurch zwei Zonen von unterschiedlicher Magnetspurbreite schreib- und lesbar sind und wobei in der Innenzone die breiteren und in der Außenzone die schmaleren Magnetspuren geschrieben und gelesen werden, und daß der mindestens eine Servomagnetkopf eine dem der Außenzone zugeordneten Magnetkopf entsprechende Spaltlänge aufweist.

Durch die erfindungsgemäße Kopf-Spur-Zuordnung wird eine Erhöhung der Spurdichte bei gleichbleibender Auflösung aber geändertem Signal-Rausch-Verhältnis erreicht. Da zum Außenrand der Magnetscheibe hin das Signal-Rausch-Verhältnis und die Auflösung besser werden, bewirkt z.B. eine Halbierung der Spurbreite in der Außenzone gegenüber herkömmlichen Systemen lediglich eine Verschlechterung des Signal-Rausch-Verhältnisses um den Faktor $\sqrt{2}$. Dadurch ist es möglich, ohne Beeinträchtigung der Datensicherheit die Kapazität jeder Magnetscheibe - ob starr oder flexibel - zu erhöhen.

Zweckmäßig können die Spaltlängen der Magnetköpfe für die Innenzone und die Außenzone derartig gewählt sein, daß die Lesepegel auf den Innenspuren beider Zonen im wesentlichen gleich groß sind. Dadurch ergibt sich für übliche Magnet- -Datenplatten mehr mehr als eine Verdoppelung der Flächenaufzeichnungsdichte in der Außenzone und eine Erhöhung der Gesamtaufzeichnungsdichte von 37 %, bei ausreichender Auflösung und ausreichendem S/R-Verhältnis.

Zweckmäßig kann der Spaltlänge des der Innenzone zugeordneten Magnetkopfes doppelt so groß gewählt sein wie die Spaltlänge des der Außenzone zugeordneten Magnetkopfes. Dieses Verhältnis der Kopfspaltlängen ist als Richtwert für Aufzeichnungsscheiben unterschiedlichen Durchmessers benutzbar.

In weiterer Erfindungsausgestaltung sind auf einer Magnetscheibe nach Aufzeichnung mindestens zwei Zonen mit konzentrischen Magnetspuren auf jeder Aufzeichnungsfläche vorgesehen, wobei die Innenzone breitere, insbesondere doppelt so breite Spuren besitzt wie die Außenzone.

In weiterer vorteilhafter Ausführung der Erfindung kann die Magnetschicht der Aufzeichnungsflächen eine magnetische Ausrichtung in Richtung der konzentrischen Spuren aufweisen.

Dadurch wird der Vorteil erhalten, daß höhere Lesesignalpegel erhalten werden, da durch die Ausrichtung der einzelnen Magnetteilchen in der Magnetschicht die Remanenzfeldstärke ansteigt. Eine leichte Verschlechterung des Frequenzverhaltens der Magnetschicht wird jedoch hervorgerufen.

In einem weiteren zweckmäßigen Erfindungsmerkmal sind die dem Servomagnetkopf zugeordneten Magnetspuren am Außenrand der Außenzone vorgesehen. Dadurch wird der Erhöhung der Spurdichte in der Außenzone Rechnung getragen, da nunmehr auf eine entsprechend erhöhte Spurenzahl positioniert werden muß. Durch das Verschieben der Servomagnetspuren nach außen wird durch den höheren Lesepegel das Signal/Rausch-Verhältnis erhöht und damit die Positioniergenauigkeit gesteigert.

In weiterer Ausbildung der Erfindung ist es auch möglich, für jeden Schreib/Lese-Magnetkopf ein Positioniersystem, zweckmäßig mit eigenem Servomagnetkopf, der jeweils dem äußeren Zonenbereich zugeordnet ist, vorzusehen. Damit wird es möglich, die Schreib/Lese-Köpfe für die Innen- und Außenzone unabhängig voneinander zu positionieren und sie gleichzeitig an radial verschiedenen Stellen der Speicherplatte zu betreiben.

Einzelheiten der Erfindung werden anhand einer Schemazeichnung nachfolgend beschrieben.

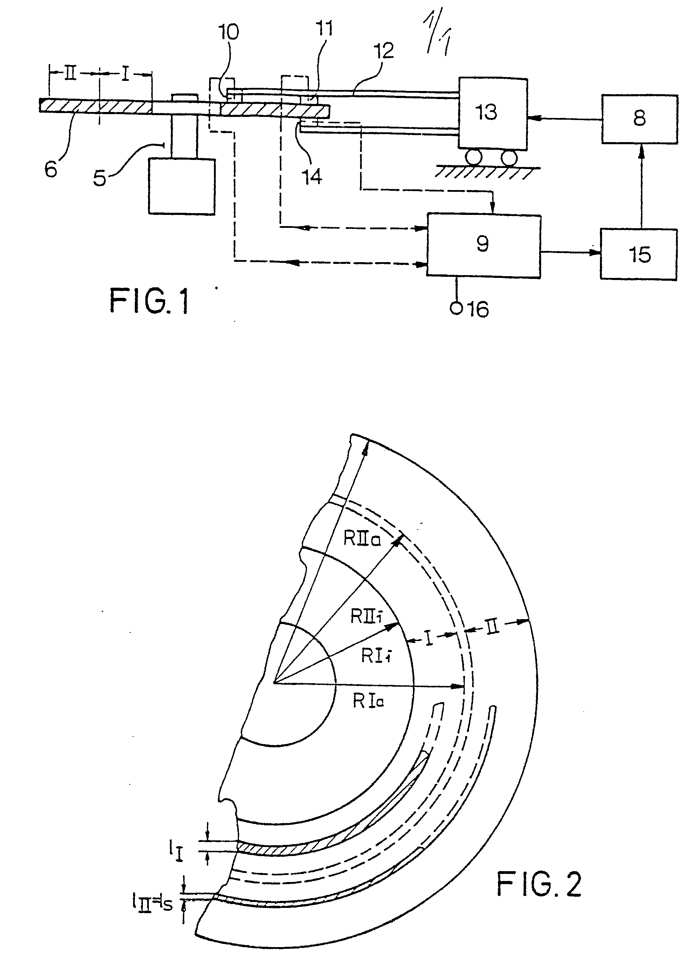

Die Zeichnung zeigt in Figur 1 den schematischen Aufbau einer Magnetplatten-Speicheranordnung in Figur 2 einen Teil einer erfindungsgemäßen Magnetscheibe mit sichtbar dargestellten Magnetspuren.

Die Anordnung besteht aus einer Antriebseinrichtung 5, einer darauf drehbaren Magnetscheibe 6, einem Magnetkopfsystem 7 sowie Servo- und Schreib/Lese-Schaltungen 8 und 9. Die Schreib/Lese-Schaltungen sind über Wirkungslinien mit den Magnetköpfen verbunden. Datenmagnetköpfe 10 und 11 können beispielsweise auf einem gemeinsamen Träger 12 vorgesehen sein, der mittels einer Wagenvorrichtung 13 geradlinig über die Magnetscheibe 6 bewegt wird. Der Datenkopf

0017175

10 soll der Innenzone I und der Datenkopf 11 der Außenzone II der Magnetscheibe 6 zugeordnet und nur in dem jeweiligen Zonenbereich bewegbar sein. An der Unterseite der Magnetscheibe 6 kann ein ebenfalls mit dem Wagen 13 bewegbarer Servomagnetkopf 14 vorgesehen sein, zweckmäßig über dem äußeren Bereich der auf die Scheibenrückseite transponierten Außenzone II.

Die Wagenvorrichtung 13 wird über die Servoschaltung 3 gesteuert, die ihre Servoinformationen vom Servokopf 14 über die Schreib/Lese-Schaltungen 9 und über übliche, nicht dargestellte Steuereinheiten erhält. Zur Trennung der Daten- und Servosignale dient eine geeignete Ausblendschaltung 15, die z.B. ein Filter sein kann. Die aufzuzeichnenden oder gelesenen Datensignale werden an der Klemme 16 der Schreib-/Leseschaltungen zu- bzw. abgeführt.

Bei üblichen Magnetplatten für die Datenaufzeichnung mit einem Durchmesser von ca. 36 cm reicht die Aufzeichnungsfläche von $R_i$ = 10 cm bis $R_a$ = 16,5 cm.

Erfindungsgemäß wird dieser Aufzeichnungsbereich aufgeteilt in eine Innenzone I, die sich von $R_{Ii}$ = 10 cm bis $R_{Ia}$ = 13,0 cm erstreckt, und eine Außenzone II, die von $R_{IIi}$ = 13,5 cm bis $R_{IIa}$ = 16,5 cm reicht.

In der Außenzone II, insbesondere in den äußeren Spuren der Außenzone II, sind die Servospuren S untergebract. In der Zeichnung befinden sich die Servospuren S auf der Rückseite der Magnetplatte 6.

Den verschiedenen Aufzeichnungsbereichen sind folgende Magnetköpfe mit gleichen Magnetspaltbreiten von b = 1,25 um und folgenden Magnetspaltlängen (1) zugeordnet, wobei letztere die Spurbreite bestimmen:

Kopf 10 (Innenzone I)    Spaltlänge $l_I$ = ca. 35 /um
Kopf 11 (Außenzone II) Spaltlänge $l_{II}$ = ca. 17,5 /um
Kopf 14 (Servokopf)      Spaltlänge $l_S$ =  ca. 17,5 /um.

Eine Magnetscheibe 6 oder Magnetplatte besitzt eine Schicht von üblicher Magnetdispersion für die Datenaufzeichnungsträger, z.B. enthaltend ein feinteiliges Magnetpigment (z.B. $Fe_3O_4$) in einem geeigneten Bindemittel (z.B. gemäß DE-PS 23 19 363). Die Schicht wird im sogenannten spin-coating Verfahren auf eine als Substrat dienende Aluminiumscheibe aufgetragen und danach thermisch gehärtet, geschliffen und nachpoliert und hat die üblichen Abmessungen. Auf einem Antriebsgerät wird diese Scheibe 6 mit üblicher Geschwindigkeit von 3600 U/min gedreht. Die Daten werden z.B. nach dem MFM Code mit einer Frequenz von 2.4 MHz (1F) bzw. 4,8 MHz (2F) aufgezeichnet.

Es ergibt sich mit 53 /um Spurabstand in der Innenzone I und 26,5 /um Spurabstand in der Außenzone II eine Spurdichte von 480 tpi in der Innenzone I und eine Spurdichte von 960 tpi in der Außenzone II. Es werden dafür ca. 1200 Servospuren S mit nominalem Spurabstand von 26,5 benötigt. Auf der innersten Spur ($R_{Ii}$ = 10 cm) stellt sich bei MFM-Code eine Aufzeichnungsdichte von 6400 bpi und auf der äußersten Spur eine Aufzeichnungsdichte von 3900 bpi ein. Gemäß dem Stand der Technik beträgt die Spurdichte in der Innenzone I 480 tpi (Spuren pro·Zoll) so daß sich eine maximale Flächenaufzeichnungsdichte von 3,1 M bit $inch^2$ (Mega Bit pro $Zoll^2$) ergibt. In der Außenzone II errechnet sich bei gleicher Spurdichte und einer Aufzeichnungsdichte von 3900 bpi eine minimale Flächenaufzeichnungsdichte von 1,9 M bit $inch^2$.

Erfindungsgemäß wird nun bei angenommener, minimaler Aufzeichnungsdichte von ebenfalls 3900 bpi in der Außenzone eine Spurdichte von 960 tpi und damit auch eine Verdoppelung der minimalen Flächenaufzeichnungsdichte auf 3,8 M bit inch$^2$ erreicht. Die maximale Flächenaufzeichnungsdichte auf den Innenspuren von 3,1 M bit inch$^2$ bleibt dabei unberührt.

Über Pegelmessungen am Lesesignal ergaben sich folgende Meßwerte:

Innenzone I (Kopf 10) ein Pegel des 2F Signals von rund 0,5 m Vpp (m V Spitze-Spitze) auf der innersten Spur ($R_{Ii}$ = 10 cm), bei einer Auflösung von 1 F/2 F = 0,56 und einem S/R-Verhältnis von 24 dB (ca. 16:1).

Außenzone II (Kopf 11) ein Pegel des 2 F Signals von rund 0,5 m Vpp auf der innersten Spur ($R_{II1}$ = 13,5 cm) bei einer Auflösung von P1F/P2F = 0,66 und einem S/R-Verhältnis von 22 dB (ca. 13:1).

Obwohl in der Außenzone II das S/R-Verhältnis um 2 dB schlechter ist, ist das Ergebnis als gleichwertig zu betrachten, da das Frequenzverhalten in der Außenzone II um ca. 20 % besser ist.

Es hat sich als sehr vorteilhaft herausgestellt, die Kopfspaltlängen l oder die Spurbreiten in der Innen- und Außenzone (I und II) so zu wählen, daß die Lesesignalpegel jeweils in der innersten Spur des jeweiligen Bereichs $R_{Ii}$ und $R_{IIi}$ gleich groß sind.

Es ist jedoch auch möglich, wenn notwendig, die Spaltlängen nach anderen Gegebenheiten festzulegen, insbesondere, wenn die Schichtdicke der Magnetschicht - wie auf üblichen Magnetplatten für die Datenaufzeichnung - nicht von innen nach außen und Verhältnis 1,8:1 abnimmt.

Es sind außer dem beschriebenen Beispiel viele andere Ausführungsarten des erfindungsgemäßen Aufzeichnungssystems denkbar. So ist die Unterteilung in mehr als zwei Zonen möglich, erfordert nur entsprechend mehr Magnetköpfe. Die in der Zeichnung als auf einem gemeinsamen Kopfträger angeordneten Datenköpfe können durchaus auf getrennt positionierbaren Kopfträgern vorgesehen sein, wenn auch separate Servoköpfe- und -systeme vorgesehen sind. Dadurch lassen sich voneinander unabhängige Abtastungen bei schnelleren Zugriffszeiten durchführen.

Patentansprüche

1. Datenspeichersystem mit rotierenden Magnetscheiben, mit konzentrischen Magnetspuren auf den Aufzeichnungsflächen und jeder Aufzeichnungsfläche zugeordneten mehreren Magnetköpfen, die auf die Magnetspuren positionierbar sind, und mit mindestens einem Servomagnetkopf, der mindestens einer Magnetspur mit Servoinformationen zugeordnet ist, und wobei innere und äußere Magnetspuren mit Dateninformationen mit denselben Frequenzen beschrieben werden, dadurch gekennzeichnet, daß jede Aufzeichnungsfläche der Magnetscheiben (6) mindestens zwei Magnetköpfe (10,11) mit unterschiedlicher Spaltlänge zugeordnet sind, wodurch zwei Zonen (I u. II) von unterschiedlicher Magnetspurbreite schreib- und lesbar sind, und wobei in der Innenzone (I) die breiteren und in der Außenzone (II) die schmaleren Magnetspuren geschrieben und gelesen werden und daß der mindestens eine Servomagnetkopf (14) eine dem der Außenzone (II) zugeordneten Magnetkopf (11) entsprechende Spaltlänge (1) aufweist.

2. System nach Anspruch 1, dadurch gekennzeichnet, daß die Spaltlänge (1) der Magnetköpfe (10 bzw. 11) für die Innenzone (I) und die Außenzone (II) derartig gewählt ist, daß der Lesepegel der innersten Spur ($R_{Ii}$) der Innenzone (I) im wesentlichen gleich dem Lesepegel der innersten Spur ($R_{IIi}$) der Außenzone (II) groß ist.

3. System nach Anspruch 1, dadurch gekennzeichnet, daß die Spaltlänge ($1_I$) des der Innenzone (I) zugeordneten Magnetkopfes (10) doppelt so groß ist wie die Spaltlänge ($l_{II}$) des der Außenzone (II) zugeordneten Magnetkopfes (11).

4.  Magnetscheibe für ein System nach Ansprüchen 1 bis 3, dadurch gekennzeichnet, daß nach einem Schreibvorgang mindestens zwei Zonen (I u. II) mit konzentrischen Magnetspuren auf jeder Aufzeichnungsfläche vorgesehen sind, wobei die Innenzone (I) breitere, insbesondere doppelt so breite Magnetspuren besitzt wie die Außenzone (II).

5.  Magnetscheibe nach Anspruch 4, dadurch gekennzeichnet, daß die Magnetschicht der Aufzeichnungsflächen eine magnetische Ausrichtung in Richtung der konzentrischen Spuren aufweist.

6.  Magnetscheiben nach Anspruch 4, dadurch gekennzeichnet, daß die dem Servomagnetkopf (14) zugeordneten Magnetspuren am Außenrand der Außenzone (II) vorgesehen sind.

7.  System nach den Ansprüchen 1 bis 3, dadurch gekennzeichnet, daß jedem der Magnetköpfe (10 u. 11) für die Innenzone (I) und die Außenzone (II) ein eigenes Kopfpositioniersystem mit eigenem Servomagnetkopf zugeordnet sind, wobei die Servomagnetköpfe jeweils den äußeren Bereichen der jeweiligen Zone zugeordnet angeordnet sind.

30  Zeichn.

FIG.1

FIG.2

0017175

| | | Nummer der Anmeldung |
|---|---|---|
| Europäisches Patentamt | EUROPÄISCHER RECHERCHENBERICHT | EP 80 10 1639 |

| EINSCHLÄGIGE DOKUMENTE | | | KLASSIFIKATION DER ANMELDUNG (Int.Cl. ³) |
|---|---|---|---|
| **Kategorie** | **Kennzeichnung des Dokuments mit Angabe, soweit erforderlich, der maßgeblichen Teile** | **betrifft Anspruch** | |
| | <u>GB - A - 1 020 747</u> (PHILIPS) <br> * Insgesamt * <br> -- | 1,2,4 | G 11 B 5/012 <br> 5/02 <br> 5/09 <br> 5/47 <br> 5/58 |
| | <u>US - A - 3 936 876</u> (TAYLOR) <br> * Spalte 2, Zeilen 43-68; Figur 1 * <br> -- | 1,6 | |
| D | <u>DE - A - 1 774 486</u> (EX-CELL-O-CORP) <br> * Seite 3, Zielen 23-25; Figur 1 * <br> -- | 1,6 | **RECHERCHIERTE SACHGEBIETE (Int. Cl. ³)** |
| | IBM TECHNICAL DISCLOSURE BULLETIN, <br> Band 17, Nr. 4, September 1974, <br> Seiten 979-980 <br> New York, U.S.A. <br> W. McCORMICK: "Multielement Servoing Head" <br> * Insgesamt * <br> -- | 1 | G 11 B 5/012 <br> 5/02 <br> 5/09 <br> 5/47 <br> 5/48 <br> 5/49 <br> 5/55 <br> 5/58 <br> 5/82 <br> 17/00 |
| | <u>FR - A - 1 309 527</u> (VEB FILMFABRIK AGFA WOLFEN) <br> * Insgesamt * <br> -- | 5 | |
| | <u>GB - A - 1 042 318</u> (IBM) <br> * Insgesamt * <br> -- | 7 | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Grunden angeführtes Dokument |
| | <u>DE - A - 2 841 426</u> (HITACHI) <br> * Seite 10, Zeilen 6-9; Seite 11, Zeile 25 - Seite 12, Zeile 29; Seite 18, Zeile 19 - Seite 20, Zeile 5; Figur 1 * <br> ./. | 5 | |

| X | Der vorliegende Recherchenbericht wurde für alle Patentansprüche erstellt. | &: Mitglied der gleichen Patentfamilie, übereinstimmendes Dokument |
|---|---|---|

| Recherchenort | Abschlußdatum der Recherche | Prüfer |
|---|---|---|
| Den Haag | 09-07-1980 | DAALMANS |

EPA form 1503.1  06.78

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | US - A - 2 901 737 (J. REED STOVALL JR.) <br> * Insgesamt * <br><br> -- | 1 | |
| A | US - A - 3 686 650 (BURROUGHS CORP.) <br> * Insgesamt * <br><br> ---- | 1 | |

**RECHERCHIERTE SACHGEBIETE (Int. Cl. 3)**